# FASCICULE DE BREVET EUROPEEN

(11) **EP 0 625 394 B1**
(45) Date de publication et mention de la délivrance du brevet: **23.09.1998**
(21) Numéro de dépôt: 94401111.3
(22) Date de dépôt: 19.05.1994
(51) Int. Cl.: B23B 41/02, B23Q 1/72, B27G 3/00, B27C 3/02, B27C 3/04

(54) **Machine pour percer de longues pièces de bois**
Bohrmaschine für lange Holzwerkstücke
Apparatus for drilling long pieces of wood

(30) Priorité: 19.05.1993 FR 9306030
(43) Date de publication de la demande: 23.11.1994
(73) Titulaire: Grandclement, Jean-Claude, F-39200 Saint-Claude (FR)
(72) Inventeur: Grandclement, Jean-Claude, F-39200 Saint-Claude (FR)
(74) Mandataire: Hasenrader, Hubert

(56) Documents cités:
- DE-A- 1 628 930
- DE-A- 3 316 283
- FR-A- 2 217 669
- FR-A- 2 439 646
- GB-A- J2 857
- GB-A- 294 457
- GB-A- 557 933
- US-A- 3 361 014
- US-A- 3 502 124
- US-A- 3 854 838
- MACHINERY, vol.98, no.2526, 12 Avril 1961, BURGESS HILL GB page 848 H.B. SCHELL 'travelling supports for a long boring bar'

## Description

La présente invention a pour objet une machine de perçage de longues pièces de bois, selon le préambule de la revendication 1.

On connaît déjà le procédé qui consiste à percer longitudinalement une pièce de bois afin d'en retirer le coeur, ainsi que cela est décrit dans le brevet européen 0 312 473 au nom du Demandeur.

L'obtention d'une telle pièce pose des problèmes qui ne sont pas résolus, en raison de la très grande longueur selon laquelle il faut percer la pièce.

Les machines et les mèches qui existent ne sont pas conçues pour de telles longueurs.

Or, on s'aperçoit qu'il ne suffit pas d'allonger la tige des mèches car au-delà d'une certaine longueur de pénétration dans le bois, les mèches fléchissent et vibrent à un degré tel que le perçage devient impossible. En outre, si les moteurs d'entraînement sont assez puissants, ces vibrations sont suffisamment intenses pour provoquer la rupture de la mèche.

Par ailleurs, les copeaux de bois arrachés par la mèche en rotation doivent être évacués et l'homme de métier sait qu'à cet effet on injecte de l'air comprimé au voisinage de la mèche afin d'entraîner les copeaux par un ou plusieurs canaux ménagés longitudinalement dans la tige de la mèche.

On connaît, par exemple par le brevet US 3 854 838, un dispositif de perçage de grande longueur, qui n'apporte pas de réponse satisfaisante au problème des vibrations de la mèche, ni à celui de l'évacuation des copeaux, qui sont simplement rejetés à l'air libre.

Le document US 3,502,124, sur lequel est basée la rédaction du préambule de la revendication 1, propose une machine du même type et n'apporte pas non plus de réponse ni quant aux vibrations de la mèche, ni quant à la récupération des débris.

La présente invention propose une solution nouvelle qui tient compte des contraintes évoquées ci-dessus, dans le cadre d'une machine de perçage de longues pièces de bois, qui comprend au moins un ensemble de perçage monté sur un bâti, ledit ensemble comportant :
- une mèche de perçage qui présente une première extrémité libre de perçage,
- un mécanisme d'entraînement en rotation de la mèche, relié à la deuxième extrémité de celle-ci,
- un mécanisme d'entraînement en déplacement longitudinal de ladite mèche comprenant un chariot de support situé au voisinage de la deuxième extrémité de la mèche, des moyens pour déplacer le chariot, et un guide dudit chariot,
- un palier fixe de support de la mèche, monté sur le bâti au voisinage de la position occupée par la première extrémité de ladite mèche avant le perçage,
- un système d'évacuation des débris comprenant un dispositif de circulation d'air comprimé, la machine comprenant, en outre, des moyens de support pour une pièce à percer.

La publication MACHINERY, vol. 98, n° 2526 du 12 avril 1961, intitulée "travelling supports for a long boring bar" montre une mèche de perçage associée à plusieurs paliers mobiles servant à réduire le fléchissement de cette mèche.

La présente invention vise à proposer une machine de perçage de longues pièces de bois équipée d'au moins un palier mobile de support de la mèche pour limiter les vibrations et les fléchissements de la mèche habituellement liés à l'utilisation d'une longue mèche, à éviter les vibrations à l'intérieur du trou de forage et à simplifier le système d'évacuation des débris, tels que copeaux ou sciures, tout en assurant la récupération de ceux-ci dans un capteur de débris.

Dans ce but, la machine comporte les caractéristiques de la partie caractérisante de la revendication 1.

On peut par exemple prévoir un seul palier mobile, dont la vitesse de déplacement est sensiblement égale à la moitié de celle de la mèche, de telle sorte qu'il se trouve constamment au voisinage de la moitié de la longueur "émergée" de cette mèche, c'est-à-dire, la longueur de la mèche se trouvant à l'extérieur de la pièce en cours du perçage de celle-ci.

On peut aussi prévoir deux paliers mobiles, initialement respectivement disposés au voisinage des premier et deuxième tiers de la mèche et qui se déplacent en synchronisme avec ladite mèche (par exemple respectivement au tiers et aux deux tiers de la vitesse de celle-ci), de telle sorte qu'ils restent constamment respectivement situés au voisinage des premier et deuxième tiers de la longueur "émergée" de la mèche.

Le palier fixe reste, quant à lui, immobile au cours du perçage. Il peut toutefois être légèrement réglable dans le sens longitudinal, de façon à venir s'ajuster au voisinage de l'extrémité de la pièce à percer.

Le capteur de débris est placé à l'extrémité de la pièce à percer. Dans le cas où le palier fixe est réglable, le capteur de débris en est avantageusement solidaire, de telle sorte que les positions du palier fixe et du capteur sont ajustées en une seule opération.

De manière avantageuse, les paliers, ou tout au moins l'un d'entre eux, comportent une lunette pour un roulement à billes, maintenant une bague centrale dont la périphérie interne est adaptée à celle de la mèche.

Selon une variante préférée, les moyens de support comprennent au moins une paire de mâchoires destinées à serrer la pièce à percer, et présentant chacune une partie plane, lesdites parties planes étant perpendiculaires entre elles et définissant ainsi deux plans de référence permettant le positionnement d'un point donné de la section d'une pièce serrée par les mâchoires en regard de la mèche de perçage.

Ces deux plans constituent ainsi des repères faciles de la position du trou de forage, ce qui permet de percer successivement différentes pièces au même endroit de leur section. Ainsi, si les pièces percées sont utilisées bout à bout, tous les trous seront précisément alignés.

La machine comporte avantageusement des moyens pour présenter les deux extrémités de la pièce à percer devant la mèche d'au moins un ensemble de perçage.

Dans un premier mode de réalisation, la machine comporte au moins un support, monté pivotant autour d'un axe perpendiculaire à l'axe de la mèche de perçage et susceptible de faire pivoter la pièce à percer pour présenter successivement ses deux extrémités à la mèche de perçage. Elle comporte, en outre, au moins un support fixe en pivotement, c'est-à-dire, non pivotant, disposé dans l'alignement de la mèche de perçage et dudit support pivotant. Ce support fixe présente des mâchoires susceptibles d'adopter une position serrée pour maintenir la pièce à percer dans l'alignement de la mèche et une position écartée pour permettre le pivotement de ladite pièce.

Dans ce cas, le capteur de débris et, éventuellement, le palier fixe, peuvent être légèrement déplacés pour libérer le pivotement de la pièce.

Un deuxième mode de réalisation, qui sera plus précisément décrit dans la suite, consiste à prévoir deux ensembles de perçage de part et d'autre de la pièce à percer.

Il est avantageux de prévoir que les moyens de support de la pièce à percer soient mobiles transversalement par rapport à l'axe de la mèche de perçage, de manière à pouvoir présenter plusieurs points différents de la section de ladite pièce à ladite mèche, en vue du perçage d'au moins deux trous parallèles.

Selon une autre caractéristique, qui sera décrite en détails en relation avec le deuxième mode de réalisation, mais qui pourrait également s'appliquer au premier, la machine comprend un mécanisme d'approvisionnement de pièces à percer et un mécanisme d'évacuation des pièces percées, situés tous deux en-dessous du niveau, dit de "perçage", auquel se trouve la mèche de l'ensemble de perçage, et des moyens sont prévus pour élever les pièces à percer jusqu'au niveau de perçage et pour abaisser les pièces percées à partir dudit niveau.

Les mécanismes d'approvisionnement et d'évacuation sont, de préférence, confondus en un seul mécanisme comportant, d'une part, un transporteur sans fin dont la direction d'avancement est perpendiculaire à l'axe de la mèche de perçage et sur lequel les pièces doivent se trouver transversalement, ce transporteur s'étendant depuis un poste de chargement des pièces à percer jusqu'à un poste de déchargement des pièces percées et, d'autre part, un organe élévateur et abaisseur ayant une partie active destinée à supporter une pièce avant et après son perçage. Cet organe est disposé au voisinage du transporteur et entre les postes de chargement et de déchargement, et la partie active est susceptible d'occuper une position basse dans laquelle elle est située en-dessous du niveau des pièces se trouvant sur le transporteur et une position haute dans laquelle elle est sensiblement située au niveau des moyens de support des pièces à percer.

Selon encore une autre caractéristique de la machine, la mèche de perçage comporte une tige creuse et une tête de forage comprenant une pièce centrale creuse, fixée à ladite tige par sa première extrémité et portant des couteaux au voisinage de sa deuxième extrémité. Chaque couteau comporte une partie extérieure qui présente, en section transversale, la forme d'un dos convexe courbe en arc de cercle, et une partie intérieure qui présente, en section transversale, la forme d'un talon concave courbe en arc de cercle. Pour chaque couteau, le centre de courbure du dos convexe et celui du talon concave coïncident entre eux et se trouvent sur l'axe de rotation de la mèche.

Comme on le comprendra à la lecture de la description détaillée qui suit, les couteaux s'étendent avantageusement sur une partie au moins de la longueur axiale de la pièce centrale creuse et font saillie au-delà de la deuxième extrémité de cette dernière. Lorsque la pièce creuse a une section circulaire, chaque couteau peut avoir la forme d'une portion d'hélicoïde, ce qui facilite le perçage et l'évacuation des copeaux.

On peut également prévoir que la pièce creuse ait une section polygonale, auquel cas les couteaux s'étendent chacun sur une portion du polygone.

Selon une variante préférée, le système d'évacuation des débris comprend un canal d'amenée d'air, relié à l'arrivée d'air comprimé et ménagé entre, d'une part, la périphérie externe de la carotte de forage, dont le diamètre est déterminé par les dimensions des parties intérieures des couteaux et, d'autre part, les périphéries internes de la tige creuse et de la pièce centrale creuse, de dimensions supérieures à celles desdites parties intérieures. Il comporte également un canal de sortie d'air, ménagé entre, d'une part, la périphérie interne du trou de forage, dont le diamètre est déterminé par les dimensions des parties extérieures des couteaux et, d'autre part, les périphéries externes de la tige creuse et de la pièce centrale creuse, de dimensions inférieures à celles desdites parties extérieures.

Pour éviter les vibrations à l'intérieur du trou de forage, la mèche présente avantageusement des cannelures extérieures de dimensions radiales sensiblement égales aux dimensions radiales externes des couteaux.

Dans ce cas, la périphérie interne des paliers de support de la mèche peut être adaptée à recevoir ces cannelures.

Selon une variante avantageuse, la pièce centrale creuse présente, au voisinage de sa première extrémité, la forme d'un manchon de raccordement pourvu d'un filetage situé entre deux couronnes de centrage dont l'une est située à l'extrémité libre du manchon et présente un diamètre externe inférieur à celui des filets du filetage, tandis que l'autre présente un diamètre externe au moins égal à celui desdits filets. L'extrémité libre de la tige creuse est munie d'un taraudage, susceptible de recevoir ledit filetage et situé entre deux sièges annulaires de dimensions respectivement adaptées pour recevoir lesdites couronnes de centrage.

De préférence lorsque la pièce creuse a une section polygonale, la tige creuse présente une section polygonale similaire dont les sommets sont arrondis et inscrits dans un cercle virtuel de diamètre sensiblement égal à celui du cercle qui circonscrit les parties extérieures des couteaux.

Dans ce cas, les arêtes du polygone peuvent jouer le rôle des cannelures précédemment évoquées, propres à éviter les vibrations à l'intérieur du trou de forage. La carotte de forage est inscrite dans la périphérie intérieure du polygone. Le canal d'amenée d'air est donc ménagé entre le contour circulaire de la carotte et les angles de la périphérie intérieure du polygone, tandis que le canal de sortie d'air est ménagé entre la périphérie interne circulaire du trou de forage et les faces de la périphérie externe du polygone.

Ce polygone est avantageusement constitué par un carré.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique en élévation d'un premier mode de réalisation de la machine de l'invention selon lequel cette machine comprend un mécanisme de pivotement d'une pièce à percer.

La figure 2 est une vue schématique en plan du même mode de réalisation de la machine de l'invention.

La figure 3 est une vue schématique en élévation d'un deuxième mode de réalisation de la machine de l'invention selon lequel cette machine comprend deux ensembles de perçage opposés permettant de percer une pièce par ses deux extrémités à la fois.

La figure 4 est une vue schématique illustrant un mécanisme automatique pour l'approvisionnement de pièces à percer et l'évacuation de pièces percées.

La figure 5 est une vue schématique avec coupe partielle d'une mêche de forage conforme à l'invention, placée en regard d'une extrémité d'une tige cylindrique.

La figure 6 est une vue schématique partielle en coupe longitudinale montrant la mêche de forage de la figure 5 montée sur une tige cylindrique et en cours de perçage d'une pièce de bois.

La figure 7 est une vue schématique en coupe transversale de l'extrémité de la tête de forage qui porte des couteaux, selon le mode de réalisation des figures 5 et 6 qui prévoit que la tête de forage a une section circulaire.

La figure 8 est une vue schématique en coupe transversale de l'extrémité d'une tête de forage qui porte des couteaux, selon un mode de réalisation qui prévoit que la tête de forage a une section carrée, cette tête de forage étant représentée lorsqu'elle est en cours de perçage d'une pièce de bois.

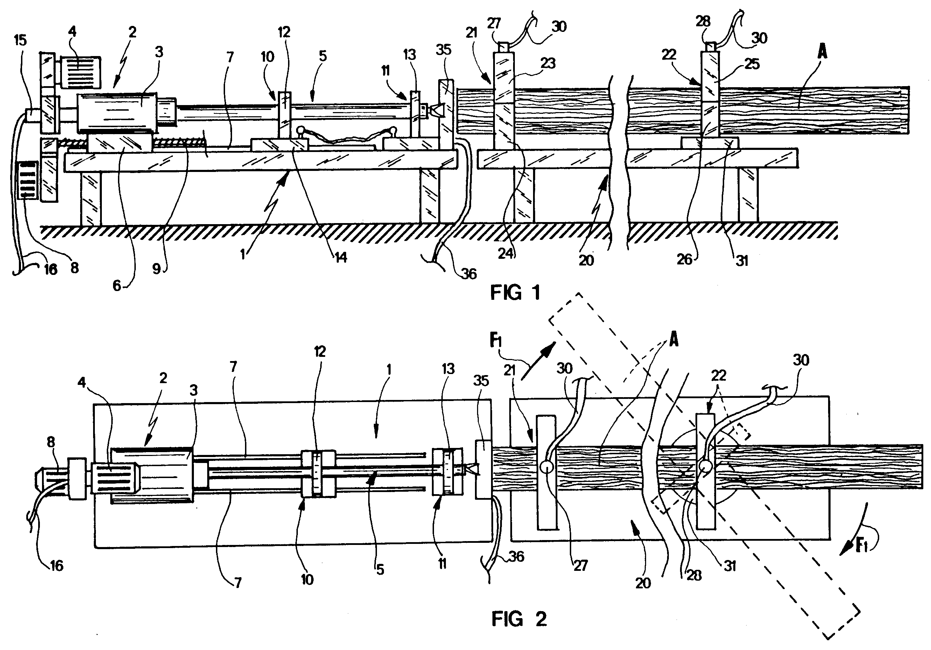

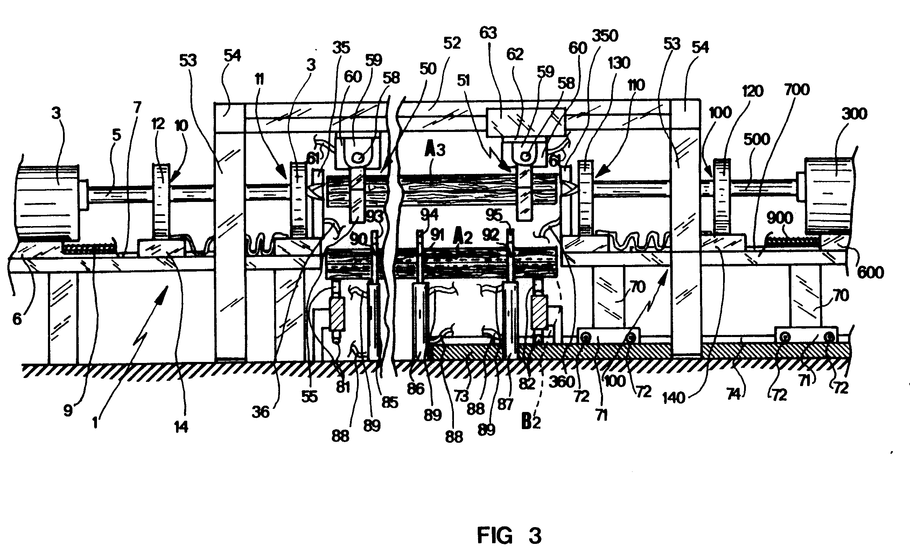

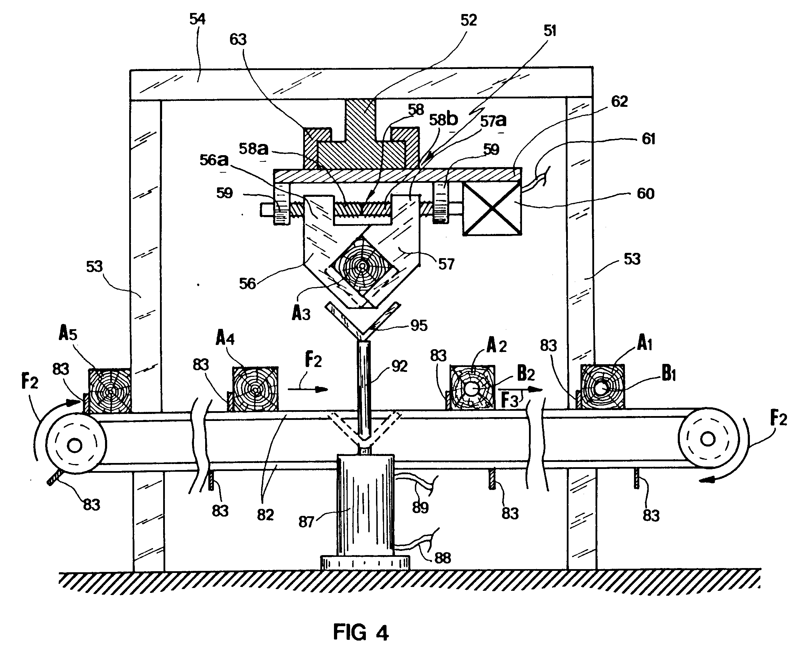

En se reportant aux figures 1 et 2, on voit qu'une machine conforme à l'invention comprend un bâti 1 à l'une des extrémités duquel se trouve un ensemble 2 comprenant un mécanisme 3 relié à un moteur 4 pour l'entraînement d'une mêche de perçage 5 qui est tubulaire, c'est-à-dire creuse, et qui sera décrite en détail plus loin.

Le mécanisme 3 est fixé à un socle 6 qui est monté mobile le long du bâti 1 sur lequel il est guidé par des profilés 7. Un second moteur 8 est relié cinématiquement à un vis sans fin horizontale 9 montée rotative et en prise avec le socle 6.

Sur le bâti 1, se trouvent deux guides 10 et 11 pour la mèche 5, chacun de ces guides 10 et 11 comprenant une lunette respectivement 12 et 13 pour un roulement à billes maintenant une bague centrale en polytétrafluoréthylène (non représentés) entourant la mèche 5.

Le guide 11, situé près de l'extrémité du bâti 1, a une position fixe par rapport à ce bâti alors que le guide 10 est fixé à une embase 14 susceptible de coulisser le long des guides 7 pour se déplacer horizontalement en synchronisme avec l'ensemble 2.

Dans l'axe du mécanisme 3, se trouve un organe de fixation de la mèche 5 de tout type connu qui est creux et qui est situé dans le prolongement d'un embout 15 auquel est raccordé un conduit 16 relié à une et une source d'air comprimé.

Dans le prolongement du bâti 1, se trouve un autre bâti 20 sur lequel se trouvent des supports pour une pièce à percer.

Ici, on a représenté deux supports 21 et 22 mais il va de soi que ce nombre n'est pas limitatif.

Comme on le précisera plus loin, les supports 21 et 22 comprennent chacun une paire de mâchoires 23-24 et 25-26 qui peuvent être écartées l'une de l'autre, pour chaque paire, et qui peuvent être rapprochées plus ou moins l'une de l'autre pour serrer une pièce de bois A.

Les mouvements des mâchoires sont commandés par des moteurs hydrauliques 27 et 28 alimentés par des conduits 30 et pilotés par une centrale de commande (non représentée).

Le support 22 est assujetti à un socle 31 monté pivotant selon un axe vertical par rapport au bâti 20.

Le fonctionnement de cette machine est le suivant:

Après avoir écarté les mâchoires 23 et 24 d'une part, 25 et 26 d'autre part, on dispose une pièce de bois à percer A et on la maintient solidement en provoquant le serrage des mâchoires 23-24 et 25-26, cette pièce de bois A se trouvant ainsi placée devant la mèche 5.

Comme en principe la mèche 5 doit forer dans la pièce A un trou longitudinal central, on doit prêter attention au positionnement précis de la pièce A et, donc, des supports 21 et 22. C'est pourquoi ces supports 21 et 22 sont avantageusement associés à des moyens de réglage de leur position, moyens qui sont à la portée de l'homme de métier et qui, par conséquent, ne seront pas décrits en détail.

Ici, on a représenté la pièce A sous forme d'un tronc d'arbre non écorcé mais la machine doit pouvoir être adaptée à des d'autres pièces de bois, telles que des poutres équarries de différentes section, ce qui est une raison de plus pour prévoir un ajustement de la position des supports 21 et 22.

Lorsque la pièce de bois A est convenablement placée et maintenue, on met en route le moteur 4 qui entraîne la mèche 5 en rotation.

On met en route également le moteur 8 qui fait tourner la vis sans fin 9, ce qui a pour effet de déplacer le socle 6 et l'ensemble 2 qu'il porte,

De la sorte, la mèche 5 tourne et avance dans le bois de la pièce A au fur et à mesure que le trou se forme, en étant convenablement maintenue et guidée par les guides 10 et 11 sur lesquels elle repose tout en tournant dans les bagues en polytétrafluoréthylène maintenues par les roulements à billes.

Le guide 12 se déplace vers le guide 11 en synchronisme avec le déplacement de l'ensemble 2 afin d'être toujours situé sensiblement à mi-distance entre le guide fixe 11 et le mécanisme de perçage 3.

Pendant que la mèche 5 crée le trou dans la pièce de bois A, on envoie de l'air comprimé par le conduit 16 et l'embout 15, de sorte qu'il pénètre à l'intérieur de la mèche creuse 5 et parcourt ainsi toute sa longueur, jusqu'au voisinage immédiat du fond du trou en cours de perçage.

Il se crée ainsi un violent courant d'air qui entre dans le trou par l'intérieur de la mèche tubulaire et ressort du trou par l'extérieur de la mèche tubulaire 5 et entraîne avec lui les copeaux et débris de bois.

Pour éviter le dégagement intempestif de ces copeaux dans l'atmosphère de l'atelier, on prévoit un capteur 35, représenté de manière extrêmement schématique pour ne pas compliquer le dessin, et relié par un conduit 36 à une boîte d'évacuation à filtres (non représentée). Le débit de cette installation de sortie est évidemment fonction de celui de la source d'air comprimé qui alimente le conduit d'entrée 16 et, dans la pratique, il peut être de l'ordre de 25 m3/seconde.

La mise en fonctionnement et la vitesse de rotation de la mèche 5 ainsi que la vitesse d'avancement de l'ensemble 2 et celle, coordonnée à la précédente, du guide 10 sont pilotées par une centrale de commande (non représentée) qui coordonne en outre l'ouverture et la fermeture des mâchoires des supports 21 et 22, ainsi que le pivotement du support 22 et la circulation d'air comprimé.

Le trou à percer dans la pièce A doit s'étendre d'une extrémité à l'autre car, comme on l'a rappelé en préambule, le but recherché est de retirer complétement le coeur de la pièce A, en vue de son séchage.

Pour obtenir un tel trou traversant, on effectue d'abord le perçage sur la moitié de la longueur de la pièce A plus une petite longueur supplémentaire, puis on retire la mèche 5 pour la ramener à sa position d'origine qui est celle représentée par la figure 1.

On déserre alors les mâchoires 23-24 pour permettre à la pièce A de s'extraire du support 21 et de suivre le support 22 qui la maintient serrée et la fait pivoter sur 180° (figure 2) selon les flêches F1.

A la fin du pivotement sur 180°, la pièce A présente à la mèche 5 son extrémité opposée à la précédente et on repète l'opération de perçage jusqu'à l'extrémité interne du trou préalablement percé.

La pièce A percée d'une extrémité à l'autre peut être retirée des supports 21 et 22 puis évacuée en vue de son stockage puis de son utilisation.

Afin de permettre à la pièce A de pivoter, les mâchoires 23 et 24 doivent pouvoir s'ouvrir en dégageant complétement les passages latéraux par lesquels la pièce A quitte sa position ancienne et prend sa position nouvelle. Pour cela, on prévoit un mécanisme de déplacement de la mâchoire 24 solidaire du bâti 20 et un mécanisme symétrique (non représenté) fixé au-dessus du précédent.

La réalisation des supports 21 et 22, de leurs mâchoires 23-24 et 25-26 ainsi que des mécanismes qui les animent est à la portée de l'homme de métier.

On a représenté les bâtis 1 et 20 tout-à-fait indépendants l'un de l'autre mais, bien entendu, il est équivalent de les prévoir solidaires l'un de l'autre ou même réalisés en un seul ensemble, dès lors que l'on peut agir sur le mécanisme de perçage indépendamment des mécanismes qui commandent les supports de la pièce à percer.

En se reportant maintenant aux figures 3 et 4, on voit un autre mode de réalisation de l'invention selon lequel la machine comprend deux ensembles placés en opposition par rapport au bâti des supports de la pièce à percer.

Les mêmes éléments que ceux des figures 1 et 2 portent les mêmes références pour l'ensemble de gauche et les mêmes références dans l'ordre des centaines pour l'ensemble de droite.

Entre les ensembles 1 et 100, se trouvent des supports pour une pièce à percer A qui, ici, est représentée comme étant une poutre équarrie. On n'a représenté que deux supports 50 et 51 mais, comme dit en regard des figures 1 et 2, ce nombre n'est pas impératif car il dépend des dimensions et du poids des pièces à percer.

Les supports 50 et 51 sont placés sous un poutre 52 d'un bâti en portique, intermédiaire entre les deux ensembles 1 et 100, et qui comprend aussi des montants 53 et des traverses 54 pour soutenir la poutre 52.

Le support 50 est fixe car, quelle que soit la longueur de la pièce à percer, elle s'étendra toujours jusqu'au voisinage du guide 13 qui appartient au bâti 1 lui-même fixe. Il comprend deux mâchoires mais seule la mâchoire 55 est visible sur la figure 3.

Au contraire, le support 51 est monté mobile afin que l'on puisse ajuster longitudinalement sa position par rapport au bâti intermédiaire, en fonction de la longueur des pièces à percer.

En vue de sa fonction de support et de sa mobilité, le support 51 comprend deux mâchoires 56 et 57 ayant chacune un talon respectivement 56a et 57a en prise avec une vis sans fin 58 à deux filetages inversés 58a et 58b, engagée dans deux tourillons 59 et reliée à un moteur hydraulique 60 alimenté par une conduite de fluide sous pression 61, cet ensemble étant solidaire d'une embase 62 à laquelle est fixé un étrier 63 monté coulissant sur la poutre 52, celle-ci étant analogue à celle d'un pont roulant classique. Cela signifie, notamment, que l'étrier 63 peut recevoir tout complément assurant un fonctionnement correct et, en particulier, des roulettes ou galets de tout type connu.

Le support 50 n'est pas mobile mais ses mâchoires doivent, bien entendu, pouvoir être écartées et rapprochées pour serrer la pièce à percer, raison pour laquelle il comprend, comme le support 51, une tige filetée 58, des tourillons 59, un moteur hydraulique 60 alimenté par une conduite de fluide sous pression 61.

La longueur des pièces à percer étant supposée variable, il faut aussi que l'on puisse ajuster la position de l'une des mèches par rapport à l'autre.

Le bâti 1 étant fixe, c'est le bâti 100 qui est monté mobile afin que l'on puisse ajuster longitudinalement sa position par rapport au bâti intermédiaire, en fonction de la longueur des pièces à percer.

A cet effet, le bâti 100 possède des supports verticaux 70 munies d'embases 71 portant des galets de roulement 72 qui reposent sur un socle fixe 73 muni de guides, ou rails, 74.

Sous la poutre 52, entre les bâtis 1 et 100, se trouvent des mécanismes permettant l'approvisionnement de pièces à percer et l'évacuation de pièces percées.

Les déplacements des pièces, depuis un poste de chargement jusqu'à la machine à percer et depuis cette dernière jusqu'à un poste de déchargement et d'évacuation, sont réalisés au moyen d'un transporteur sans fin dont l'axe de déplacement est perpendiculaire à l'axe des pièces.

Ce transporteur comprend deux chaînes fermées en boucle 81 et 82, guidées, maintenues et mises en mouvement par tous moyens connus bien connus de l'homme de métier et qui ne font pas partie de l'invention.

Entre les chaînes 81 et 82, se trouvent des vérins verticaux à double effet. Leur nombre dépend de la longueur et du poids des pièces à percer. Ici, on a représenté trois vérins 85, 86 et 87 raccordés à des conduites de fluide sous pression respectivement 88 pour provoquer l'élévation et 89 pour provoquer l'abaissement de tiges 90, 91 et 92.

Au sommet des tiges de vérins 90, 91 et 92, se trouvent des parties actives 93, 94 et 95 sur lesquelles doivent reposer les pièces à percer et les pièces percées.

Les parties actives 93, 94 et 95 doivent, par conséquent, avoir des formes concaves et des dimensions adaptées à ces pièces.

Lorsque les pièces à percer sont des troncs substantiellement cylindriques, (comme évoqué par les figures 1 et 2) écorcés ou pas, les parties actives 93, 94 et 95 ont une forme courbe, en berceau, de rayon de courbure assez large pour recevoir les troncs à percer les plus gros. Ceux qui sont plus petits sont quand même convenablement soutenus du fait qu'il trouvent un équilibre naturel au centre du berceau.

Lorsque les pièces à percer sont des poutres équarries, les parties actives doivent toujours être concaves mais, afin de donner aux pièces à percer de section quadrangulaire l'orientation voulue, les parties actives doivent présenter des faces rectilignes, par exemple en forme de U.

Ici, les pièces à percer doivent être disposées obliquement, c'est-à-dire que deux de leurs arêtes opposées doivent se trouver selon un même ligne verticale virtuelle, afin de se présenter convenablement par rapport aux mâchoires des supports 50 et 51.

C'est la raison pour laquelle les parties actives 93, 94 et 95 sont constituées par des équerres dont les branches sont orientées à 90° l'une de l'autre et symétriquement par rapport à la verticale.

Cette disposition permet de faire travailler la machine avec des éléments en bois quadrangulaires de dimensions très différentes sans changer les parties actives, la forme des mâchoires des supports ayant les mêmes possibilités d'adaptation puisque chacune d'elles a une forme en équerre. Plus la pièce à percer est grosse, plus les mâchoires sont éloignées quand elles sont serrées, plus la pièce à percer est fine, plus les mâchoires sont proches quand elles sont serrées.

Naturellement, ces mâchoires peuvent avoir d'autres formes, en particulier adaptées aux formes des pièces de bois à percer, lesquelles peuvent être non seulement à section cylindrique ou carrée mais rectangulaire, ou plus généralement polygonale.

Le fonctionnement de la machine des figures 3 et 4 est le suivant :

A l'origine, on détermine les dimensions des pièces à percer et l'on ajuste la position du support 51 par des moyens moteurs de tout type connu à la portée de l'homme de métier. On fait de même pour le bâti 100 tout entier par rapport au socle 73, par de smoyens moteurs également de tout type connu et à la portée de l'homme de métier.

Les pièces à percer sont placées sur les chaînes 81 et 82 du transporteur, selon un écartement déterminé, par exemple au moyen de taquets 83.

Le transporteur sans fin est entraîné selon la flêche F2, pas à pas, afin d'amener une première pièce à percer à l'aplomb des parties actives des tiges de vérin mises en position basse.

Dans cette position d'abaissement, les parties actives sont situées à un niveau inférieur à celui des pièces posées sur les chaînes 81 et 82 et, sur la figure 4, on a représenté en pointillés cette position basse de la tige 92 et de l'équerre 95 qu'elle porte.

On introduit la pression de fluide dans les vérins 85, 86 et 87 par les conduites 88 afin d'élever les tiges de vérin 90, 91 et 92 qui soulèvent la première pièce à percer convenablement orientée. Cette opération d'orientation peut être réalisée au moyen d'un basculeur (non représenté) et est à la portée de l'homme de métier.

Les mâchoires des supports 50 et 51 sont mises en position d'écartement par les moteurs hydrauliques 60 qui, en faisant tourner les tiges filetées 58, obligent les pas de vis inversés 58a et 58b à entraîner en translations opposées les talons 56a et 57a, ce qui déplace ipso facto les mâchoires. De la sorte, on permet aux tiges de vérin 90, 91 et 92 d'élever les équerres 93, 94 et 95 et la pièce à percer qu'elles portent jusqu'au niveau voulu pour que les mâchoires, rapprochées par paires au moyen des moteurs hydrauliques 60, puissent serrer la pièce à percer.

Cette position est représentée en pointillés sur la figure 4.

Les tiges de vérin 90, 91 et 92 sont un peu abaissées par le fluide sous pression établi de manière différentielle par dans les vérins 85, 86 et 87 par les conduits 88 et 89, pour que les équerres 93, 94 et 95 soient indépendantes de la pièce à percer pendant l'opération de perçage car il faut éviter que des mouvements, notamment des vibrations, soient transmises aux vérins par la pièce à percer.

Ainsi, dans la position de la figure 4, le transporteur sans fin est à l'arrêt, les équerres sont dans une psoition intermédiaire entre leur position basse extrême et leur position haute extrême, le perçage se fait par les deux extrémités de la pièce à percer.

L'une des deux mèches 5 ou 500 est immobilisée en avancement avant d'atteindre le milieu exact de la pièce à percer pendant que l'autre continue son avancement un peu au-délà de ce milieu puis est retirée pendant que l'autre reprend son avance et dépasse la position extrême atteinte par la première mèche afin de percer le fond subsistant et d'assurer ainsi la continuité du trou, après quoi cette deuxième mèche est à son tour retirée, les deux mèches 5 et 500 retrouvant ainsi leur position de départ représentée sur la figure 3.

Les tiges de vérin 90, 91 et 92 sont à nouveau élevées jsuqu'à ce que les équerres 93, 94 et 95 soient au contact de la pièce percée. Les mâchoires des supports 50 et 51 sont écartées par les moteurs hydrauliques 60 selon un processus inverse de celui qui a été décrit ci-dessus. Les tiges de vérin 90, 91 et 92 sont abaissées jusqu'à la position basse extrême des équerres 93, 94 et 95, afin de déposer la pièce percée sur les chaînes 81 et 82.

Le transporteur sans fin est mis en marche et la pièce percée est acheminée vers son poste de déchargement et d'évacuation, comme l'indique la flêche F3 de la figure 4.

En considérant cette figure 4, on voit que la première pièce A1 a déjà été percée et présente un trou longitudinal continu B1, la deuxième pièce A2 a également été percée et présente un trou longitudinal continu B2.

La troisième pièce A3 est en cours de percement, elle est en position haute, serrée par les mâchoires des supports 50 et 51, en face des mèches 5 et 500 (figure 3).

La quatrième pièce à percer est sur les chaînes 81 et 82, en attente de prendre la place de la pièce A3 et est suivie de la cinquième pièce A5 qui précéde la sixième pièce et ainsi de suite.

On a ainsi un fonctionnement semi-continu qui peut être entièrement automatisé, par exemple en prévoyant une centrale de commande reliée à tous les éléments mobiles de la machine et équipée de tous les moyens informatiques permettant à un logiciel de gérer toutes les variables à prendre en considération.

On comprend que le perçage de pièces de bois longues ne peut pas être assuré avec une machine conforme à l'invention si les mèches sont de type courant, pour les raisons déjà évoquées en préambule.

On n'a décrit ci-dessus qu'un mode de réalisation prévoyant le perçage d'un seul trou.

Mais, dans la réalité, on peut être amenés à percer plusieurs trous dans une même pièce de bois. Si celle-ci a une section oblongue (notamment rectangulaire) on peut souhaiter forer plusieurs trous sécants afin qu'ils créent ensemble un passage lui-même à section oblongue, coordonnée à la section de la pièce de bois.

Pour ce faire, il est intéressant de procéder au forage des trous au moyen d'une seule mêche, comme décrit, dès lors que l'on prévoit que les mâchoires de soutien des pièces de bois sont montées mobiles transversalement, et de préférence verticalement aussi, afin de présenter à la mêche de forage divers points de la section de la pièce de bois, en vue de perçages successifs.

On comprend que l'important est de prévoir un mouvement relatif entre la mèche et la pièce de bois, de sorte que l'on obtiendrait le même résultat avantageux en laissant fixes les mâchoires de soutien des pièces de bois et en rendant mobile l'ensemble de perçage mais il est bien plus simple, d'un point de vue mécanique, de rendre mobiles les supports des pièces de bois.

Une autre solution pourrait consister à prévoir plusieurs mêches parallèles, mais au prix d'une plus grande complexité mécanique et, surtout, d'un résultat moins intéressant car en ayant une seule mèche et en rendant possible un réglage centimétrique, voire millimétrique, des supports des pièces de bois, on peut forer des trous décalés d'une distance très faible alors que plusieurs mèches parallèles auraient un écartement minimum beaucoup plus important.

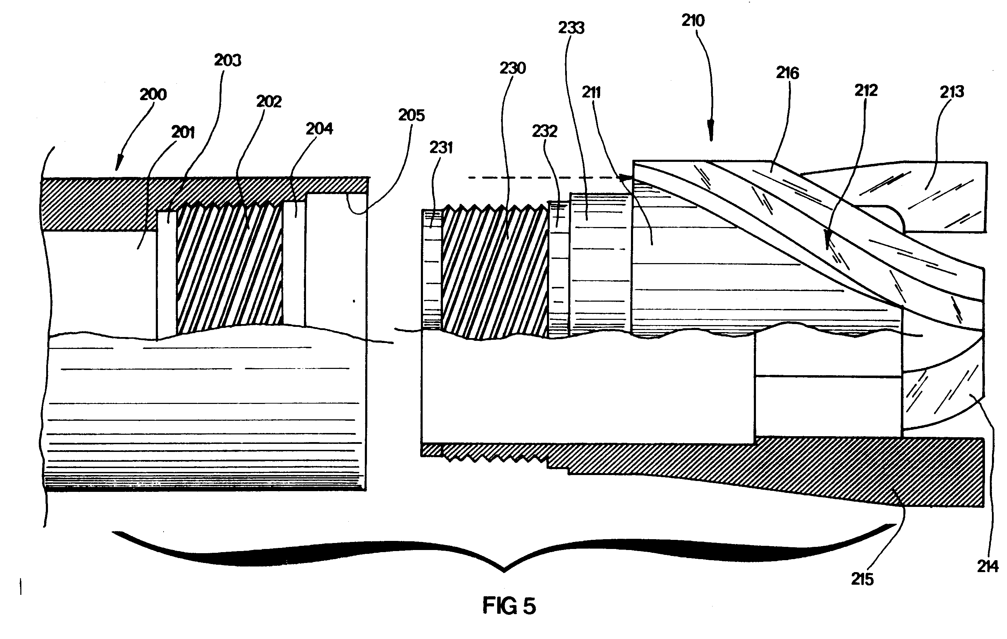

En se reportant aux figures 5 à 8, on voit une mêche de forage réalisée conformément à l'invention et qui correspond aux mêches 5 et 500 des figures 1 à 3.

Elle comprend d'une part une tige 200 formée d'un tube creux et d'autre part une tête de forage 210.

La tige 200 possède un passage longitudinal intérieur continu 201 et un taraudage 202 prévu entre deux sièges 203 et 204 de diamètres différents, le siège le plus intérieur 203 ayant un diamètre plus petit que celui du siège 204 le plus extérieur.

Le passage longitudinal 200 se termine par une embouchure 205 dont le diamètre est supérieur à celui du siège 204.

La tête de forage 210 est composée d'une pièce centrale creuse 211 et de quatre couteaux périphériques 212, 213, 214 et 215.

La pièce creuse 211 a, sur les figures 5 à 7 une section circulaire, les couteaux 212 à 215 étant espacés angulairement les uns des autres pour laisser subsister des espaces entre eux.

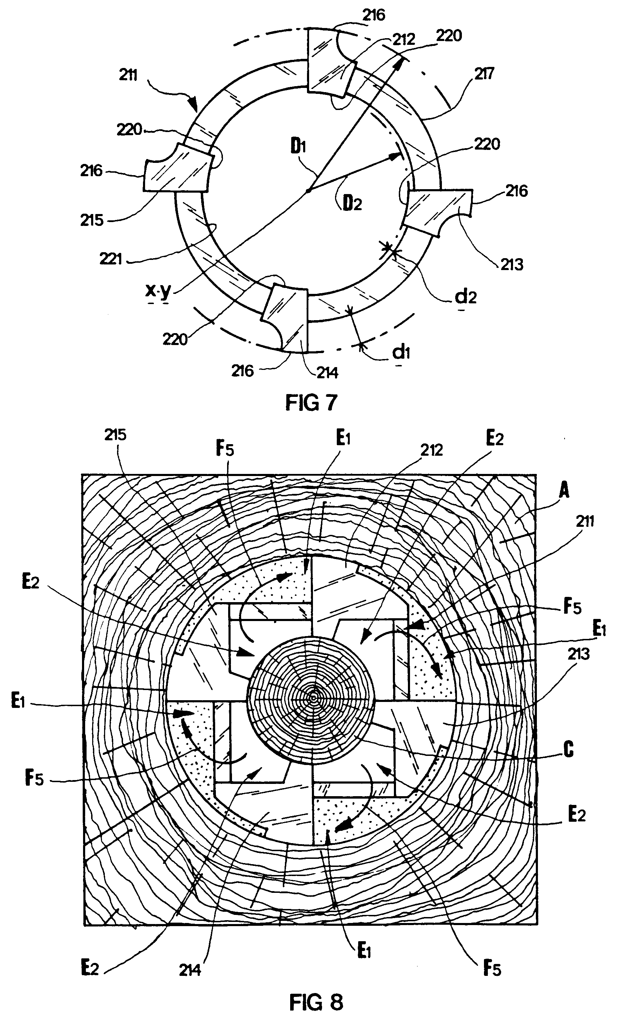

Chaque couteau présente :
- une partie extérieure 216 qui est située au-delà du contour extérieur circulaire 217 de la pièce creuse 211 et qui présente, considérée transversalement, un dos convexe courbe en arc de cercle dont le centre x coïncide avec celui y de la pièce creuse 211 (figure 7).
- une partie intérieure 220 qui est située en-deçà du contour intérieur 221 de la pièce creuse 211 et qui présente, considérée transversalement, un talon concave courbe en arc de cercle dont le centre y coïncide avec celui y de la pièce creuse 211.

On voit qu'ainsi les quatre parties extérieures convexes courbes s'inscrivent dans un cercle centré en x et dont le diamètre D1 est supérieur à celui du contour extérieur circulaire 217 sur une distance d1, tandis que les quatre parties intérieures concaves courbes 220 sont circonscrites à un cercle également centré en x et dont le diamètre D2 est inférieur à celui du contour intérieur circulaire 221 sur une distance d2 (figure 7).

La partie arrière de la pièce creuse 211 présente un manchon de raccordement composé d'un filetage 230 placé entre deux couronnes de centrage 231 et 232 dont les diamètres correspondent respectivement, au jeu près, aux diamètres des sièges 203 et 204 de la tige 200, lesquels diamètres sont respectivement inférieur et supérieur aux diamètres interne et externe du taraudage 202 et, donc, du filetage 230.

Au-delà de la couronne 232, se trouve une portée cylindrique 233 dont le diamètre correspond, au jeu près, à celui de l'embouchure 205 de la tige 200.

On comprend que ces dispositions permettent de rendre interchangeables les têtes de forage 210, dont les couteaux s'usent, par rapport aux tiges 200 qui n'ont pas d'organes de travail.

Pour fixer la tête de forage 210 sur la tige 200, on engage le filetage 230 dans le taraudage 202 et l'on visse jusqu'à ce que les couronnes de centrage 231 et 232 soient placées sur les sièges 203 et 204, la portée cylindrique 233 étant, elle, placée dans l'embouchure 205.

Ce montage assure une très grande rigidité et une très grande robustesse de l'ensemble tige 200 - tête 210 qui est garanti au maximum contre les effets des vibrations subies lors du forage effectif.

Lorsque la tête de forage 210 des figures 5 à 7 est entraînée en rotation par la tige 200 qui lui transmet le mouvement généré par le moteur 4, elle pénètre dans le bois de la pièce à percer et progresse au fur et à mesure du forage, sous l'effet du moteur d'avancement 8.

La disposition des couteaux 212 à 215 par rapport aux contours extérieur 217 et intérieur 221 a pour effet de créer dans la pièce de bois A un passage annulaire.

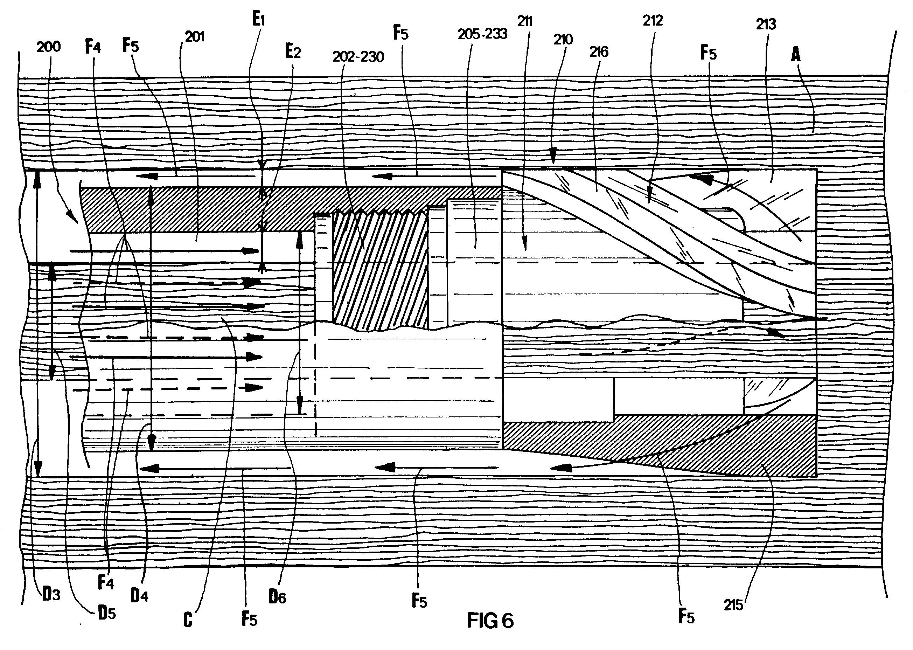

En effet :
- La partie extérieure 216 fore un trou dont le diamètre D3 (figure 6) est supérieur au diamètre extérieur D4 de la tige 200 et laisse donc subsister un espace annulaire E1.
- La partie intérieure 220 ne s'étendant pas jusqu'au centre, laisse intacte la partie centrale de la pièce de bois A sous forme d'un cylindre continu C dont le diamètre extérieur D5 est inférieur au diamètre intérieur D6 de la tige 200, en laissant subsister un espace annulaire E2.

L'air comprimé provenant du conduit 16 et de l'embout 15 est envoyé, comme dit plus haut, à l'intérieur de la tige creuse 200 et l'on voit sur la figure 6 que dès création de la partie centrale C, l'air comprimé passe tout autour de celle-ci dans l'espace annulaire E2, selon les flêches F4, avant d'atteindre le front du forage où il rencontre les copeaux de bois créés par le forage lui-même et trouve un passage hélicoïdal entre les couteaux 212 à 215 communiquant avec l'espace annulaire E1.

Chargé des copeaux qu'il entraîne avec lui, l'air parcourt ces espaces selon les flêches F5, en sens inverse de celui indiqué par les flêches F4.

Il ressort ainsi par l'extrémité déjà percée de la pièce de bois A, où il est aspiré par le capteur 35 et évacué par le conduit 36 vers une boîte à filtre qui retient les copeaux.

Les espaces E1 et E2 sont indispensables et résultent, avec le mode de réalisation des figures 5 à 7, des différences de diamètres de pièces circulaires.

En observant la figure 6, on voit que plus la tige 200 s'étend profondément dans la pièce de bois A, plus son extrémité est éloignée des lunettes 12 et 13 qui la soutiennent.

Elle est donc libre selon toute la longueur qui s'étend de la lunette 13 à la tête de forage 210 et plus cette longueur est importante, plus la tige 200 peut fléchir et vibrer, ce qui est évidemment défavorable au bon fonctionnement de la machine.

Pour éviter cela, on peut prévoir que la tige creuse 200 présente des cannelures extérieures (non représentées) dont le diamètre extérieur est sensiblement égal au diamètre D3 du trou foré par les parties extérieures 216 couteaux 212 à 215.

La tige creuse 200 est alors soutenue par ses cannelures selon toute sa longueur contre la paroi circulaire du trou foré et n'est plus soumis à aucun fléchissement, de sorte que l'on n'a plus à craindre de vibrations néfastes au fonctionnement de la machine.

Il devient alors possible d'utiliser des tiges très longues, permettant de forer des trous extrêmement profonds.

On peut aussi donner à la tige creuse 200 une section polygonale dont les sommets sont arrondis et situés sur des diagonales dont la longueur est sensiblement égale au diamètre D3 car, ici encore, la tige 200 est constamment en appui contre la paroi circulaire du trou foré, par ses angles convenablement arrondis pour glisser sur cette paroi.

L'espace E1 par lequel les copeaux sont entraînés dans l'air comprimé forme alors un passage tournant qui force l'air à se déplacer le long du trou foré selon un parcours hélicoïdal.

La section polygonale de la tige 200 est avantageusement carrée car cette section est plus facilement disponible dans le commerce parmi les profilés métalliques existants mais il va de soi qu'il ne s'agit pas d'une limitation de la portée de l'invention.

Bien entendu, les organes qui coopèrent pas vissage (taraudage 202 et filetage 230) ou qui sont mis en place par rotation (couronnes de centrage 231-232 et sièges 203-204, portée 211 et embouchure 205) doivent être circulaires, ce qui signifie que ces organes sont rapportés à l'extrémité de la tige 200 lorsque celle-ci a une section polygonale.

L'invention prévoit également que la tête de forage 210 comprenne une pièce creuse 211 à section polygonale, les couteaux 212 à 215 s'étendant chacun sur une fraction de la longueur de chaque côté du polygone.

Lorsque la pièce creuse 211 a une section carrée, le nombre de couteaux est avantageusement de quatre, un par côté.

Comme il est plus rationnel de prévoir autant de couteaux que le polygone a de côtés, le nombre de couteaux peut être différent de quatre.

Sur la figure 8, on voit en coupe transversale une pièce creuse 211 à section carrée en cours de forage d'une pièce de bois A et portant quatre couteaux 212 à 215, fixés, notamment par soudure, aux quatre côtés de la tranche de la pièce 211.

Les mêmes éléments que ceux déjà décrits portent les mêmes références et l'on distingue les flêches F5 indiquant l'arrivée d'air par les quatres espaces E2 déterminés par les faces planes intérieures de la pièce 211 et par la périphérie circulaire de la partie centrale C de la pièce de bois A.

Pour illustrer l'évacuation des copeaux de bois, on a symbolisé ceux-ci par un semis dans les quatre espaces E1 déterminés par les faces planes extérieures de la pièce 211 et par la paroi circulaire du trou foré par les couteaux 212 à 215, l'air étant propre à son arrivée au fond du trou foré, par les espaces E1.

Pour éviter que la partie centrale C, après forage complet, soit entraînée en rotation par la ou les mèches, on peut arrêter le forage afin la fin, pour laisser subsister une petite partie fixe qui retient immobile la partie centrale C, partie que l'on retire en la cassant au moyen de coups appliqués à l'une ou aux deux extrémités de la partie centrale C.

## Revendications

1. Machine de perçage de longues pièces de bois, comprenant au moins un ensemble de perçage monté sur un bâti (1), ledit ensemble comportant :
- une mèche de perçage (5, 500) présentant une première extrémité libre de perçage munie de couteaux (212 à 215)
- un mécanisme (3, 4) d'entraînement en rotation de la mèche (5, 500), relié à la deuxième extrémité de celle-ci,
- un mécanisme d'entraînement en déplacement longitudinal de ladite mèche comprenant un chariot (6) de support situé au voisinage de la deuxième extrémité de la mèche, des moyens (9) pour déplacer le chariot, et un guide (7) dudit chariot,
- un palier fixe (11) de support de la mèche (5, 500), monté sur le bâti (1) au voisinage de la position occupée par la première extrémité de ladite mèche avant le perçage,
- un système d'évacuation des débris comprenant un dispositif de circulation d'air comprimé (15, 16, 36), la machine comprenant, en outre, des moyens de support (20, 21, 22 ; 50, 51) pour une pièce (A) à percer,
caractérisée en ce que l'ensemble de perçage comporte au moins un palier mobile (10) de support de la mèche (5, 500), monté sur une embase (14) susceptible de coulisser par rapport au bâti (1) en synchronisme avec le chariot (6), de telle sorte que ledit palier mobile (10) se trouve constamment au voisinage d'une position correspondant à une fraction constante de la longueur de mèche s'étendant entre le palier fixe (11) et la deuxième extrémité de la mèche (5, 500), en ce que le guide (7) du chariot (6) sert également de guide à l'embase (14) du palier mobile (10), et en ce que la mèche présente des moyens de cannelures extérieures de dimensions radiales sensiblement égales aux dimensions radiales externes des couteaux (212 à 215), le système d'évacuation des débris comprenant un capteur (35) de débris, placé à l'extrémité de la pièce (A) présentée à la mèche de perçage (5, 500) et relié au dispositif de circulation d'air comprimé.

2. Machine selon la revendication 1, caractérisée en ce que, le palier fixe (11) étant réglable, le capteur de débris (35) est solidaire dudit palier.

3. Machine selon la revendication 1 ou 2, caractérisée en ce qu'au moins l'un des paliers (10, 11) comporte une lunette (12, 13) pour un roulement à billes, maintenant une bague centrale dont la périphérie interne est adaptée à celle de la mèche (5, 500).

4. Machine selon l'une quelconque des revendications 1 à 3, caractérisée en ce que les moyens de support (20, 21, 22 ; 50, 51) comprennent au moins une paire de mâchoires (23, 24 ; 25, 26 ; 56, 57) destinées à serrer la pièce (A) à percer, et présentant chacune une partie plane, lesdites parties planes étant perpendiculaires entre elles et définissant ainsi deux plans de référence permettant le positionnement d'un point donné de la section d'une pièce (A) serrée par les mâchoires en regard de la mèche de perçage (5, 500).

5. Machine selon l'une quelconque des revendications 1 à 4, caractérisée en ce qu'elle comporte des moyens pour présenter les deux extrémités de la pièce (A) à percer devant la mèche (5, 500) d'au moins un ensemble de perçage.

6. Machine selon la revendication 5, caractérisée en ce qu'elle comporte au moins un support (22) monté pivotant autour d'un axe perpendiculaire à l'axe de la mèche de perçage (5), susceptible de faire pivoter la pièce (A) à percer pour présenter successivement ses deux extrémités à la mèche de perçage (5), et en ce qu'elle comporte, en outre, au moins un support fixe en pivotement (21) disposé dans l'alignement de la mèche de perçage (5) et dudit support pivotant (22), ledit support fixe (21) présentant des mâchoires (23, 24) susceptibles d'adopter une position serrée pour maintenir la pièce (A) à percer dans l'alignement de la mèche (5) et une position écartée pour permettre le pivotement de ladite pièce (A).

7. Machine selon l'une quelconque des revendications 1 à 6, caractérisée en ce que les moyens de support (50, 51) de la pièce (A) à percer sont mobiles transversalement par rapport à l'axe de la mèche de perçage (5, 500), de manière à pouvoir présenter plusieurs points différents de la section de ladite pièce (A) à ladite mèche, en vue du perçage d'au moins deux trous parallèles.

8. Machine selon l'une quelconque des revendications 1 à 7, caractérisée en ce qu'elle comprend un mécanisme d'approvisionnement de pièces (A) à percer et un mécanisme d'évacuation des pièces percées, situés tous deux en-dessous du niveau, dit de "perçage", auquel se trouve la mèche (5, 500) de l'ensemble de perçage, des moyens étant prévus pour élever les pièces (A) à percer jusqu'au niveau de perçage et pour abaisser les pièces percées à partir dudit niveau, et en ce que les mécanismes d'approvisionnement et d'évacuation sont confondus en un seul mécanisme comportant, d'une part, un transporteur sans fin (81, 82) dont la direction d'avancement est perpendiculaire à l'axe de la mèche de perçage (5, 500) et sur lequel les pièces (A) doivent se trouver transversalement, ce transporteur s'étendant depuis un poste de chargement des pièces (A) à percer jusqu'à un poste de déchargement des pièces percées et, d'autre part, un organe élévateur et abaisseur (85, 86, 87) ayant une partie active (93, 94, 95) destinée à supporter une pièce (A) avant et après son perçage, ledit organe étant disposé au voisinage du transporteur et entre les postes de chargement et de déchargement, et ladite partie active (93, 94, 95) étant susceptible d'occuper une position basse dans laquelle elle est située en-dessous du niveau des pièces (A) se trouvant sur le transporteur (81, 82) et une position haute dans laquelle elle est sensiblement située au niveau des moyens de support des pièces (A) à percer.

9. Machine selon l'une quelconque des revendications 1 à 8, caractérisée en ce que la mèche de perçage (5, 500) comporte une tige creuse (200) et une tête de forage (210) comprenant une pièce centrale creuse (211), fixée à ladite tige (200) par sa première extrémité et portant des couteaux (212 à 215) au voisinage de sa deuxième extrémité, en ce que chaque couteau comporte une partie extérieure (216) présentant, en section transversale, la forme d'un dos convexe courbe en arc de cercle, et une partie intérieure (220) présentant, en section transversale, la forme d'un talon concave courbe en arc de cercle, et en ce que, pour chaque couteau, le centre de courbure du dos convexe et celui du talon concave coïncident entre eux et se trouvent sur l'axe de rotation de la mèche (5, 500).

10. Machine selon l'une quelconque des revendications 1 à 9, caractérisée en ce que le système d'évacuation des débris comprend un canal d'amenée d'air, relié à l'arrivée d'air comprimé et ménagé entre, d'une part, la périphérie externe de la carotte de forage, dont le diamètre est déterminé par les dimensions des parties intérieures (220) des couteaux (212 à 215) et, d'autre part, les périphéries internes de la tige creuse (200) et de la pièce centrale creuse (211), de dimensions supérieures à celles desdites parties intérieures (220), et un canal de sortie d'air, ménagé entre, d'une part, la périphérie interne du trou de forage, dont le diamètre est déterminé par les dimensions des parties extérieures (216) des couteaux (212 à 215) et, d'autre part, les périphéries externes de la tige creuse (200) et de la pièce centrale creuse (211), de dimensions inférieures à celles desdites parties extérieures (216).

11. Machine selon l'une quelconque des revendications 9 et 10, caractérisée en ce que la pièce centrale creuse (211) présente, au voisinage de sa première extrémité, la forme d'un manchon de raccordement pourvu d'un filetage (230) situé entre deux couronnes de centrage (231, 232) dont l'une (231) est située à l'extrémité libre du manchon et présente un diamètre externe inférieur à celui des filets du filetage (230), tandis que l'autre (232) présente un diamètre externe au moins égal à celui desdits filets, et en ce que l'extrémité libre de la tige creuse (200) est munie d'un taraudage (202), susceptible de recevoir ledit filetage (230) et situé entre deux sièges annulaires (203, 204) de dimensions respectivement adaptées pour recevoir lesdites couronnes de centrage (231, 232).

12. Machine selon l'une quelconque des revendications 9 à 11, caractérisée en ce que la pièce creuse (211) a une section polygonale, les couteaux (212 à 215) s'étendant chacun sur une portion du polygone, et en ce que la tige creuse (200) présente une section polygonale similaire dont les sommets sont arrondis et inscrits dans un cercle virtuel de diamètre sensiblement égal à celui du cercle qui circonscrit les parties extérieures (216) des couteaux (212 à 215).

## Claims

1. Machine for drilling long pieces of wood, including at least one drilling assembly mounted on a frame (1), said assembly comprising:
- a drill bit (5, 500) having a first free drilling end provided with blades (212 to 215),
- a mechanism (3, 4) for rotating the bit (5, 500), connected to the second end thereof,
- a mechanism for longitudinal displacement of said bit including a supporting carriage (6) situated in the vicinity of the second end of the bit, means (9) for displacing the carriage, and a guide (7) for said carriage,
- a fixed bearing (11) for support of the bit (5, 500), mounted on the frame (1) in the vicinity of the position occupied by the first end of said bit before drilling,
- a debris removal system including a compressed air circulating device (15, 16, 36),
the machine further including supporting means (20, 21, 22; 50, 51) for a piece (A) to be drilled,
characterised in that the drilling assembly comprises at least one movable bearing (10) for support of the bit (5, 500), mounted on a base (14) capable of sliding relative to the frame (1) in synchronisation with the carriage (6), so that said movable bearing (10) is constantly located in the vicinity of a position corresponding to a constant fraction of the bit length extending between the fixed bearing (11) and the second end of the bit (5, 500), in that the guide (7) of the carriage (6) also serves as a guide for the base (14) of the movable bearing (10), and in that the bit has external groove means with radial dimensions substantially equal to the external radial dimensions of the blades (212 to 215), the debris removal system including a debris pick-up (35) placed at the end of the piece (A) presented to the drill bit (5, 500) and connected to the compressed air circulating device.

2. Machine according to claim 1, characterised in that, the fixed bearing (11) being adjustable, the debris pick-up (35) is integral with said bearing.

3. Machine according to claim 1 or 2, characterised in that at least one of the bearings (10, 11) comprises a cage (12, 13) for a ball bearing, maintaining a central ring whose inner periphery is adapted to that of the bit (5, 500).

4. Machine according to any of claims 1 to 3, characterised in that the supporting means (20, 21, 22; 50, 51) include at least one pair of jaws (23, 24; 25, 26; 56, 57) designed to grip the piece (A) to be drilled, and each having a plane portion, said plane portions being perpendicular to each other and thus defining two reference planes allowing the positioning of a given point of the section of a piece (A) gripped by the jaws opposite the drill bit (5, 500).

5. Machine according to any of claims 1 to 4, characterised in that it comprises means for presenting the two ends of the piece (A) to be drilled before the bit (5, 500) of at least one drilling assembly.

6. Machine according to claim 5, characterised in that it comprises at least one support (22) mounted pivotably about an axis perpendicular to the axis of the drill bit (5), capable of pivoting the piece (A) to be drilled in order to present its two ends successively to the drill bit (5), and in that it further comprises at least one fixed non-pivotable support (21) arranged in alignment with the drill bit (5) and said pivoting support (22), said fixed support (21) having jaws (23, 24) capable of adopting a close-together position to maintain the piece (A) to be drilled in alignment with the bit (5) and a spaced-apart position to allow pivoting of said piece (A).

7. Machine according to any of claims 1 to 6, characterised in that the supporting means (50, 51) for the piece (A) to be drilled are movable transversely relative to the axis of the drill bit (5, 500), so as to be able to present several different points of the section of said piece (A) to said bit, for the purpose of drilling at least two parallel holes.

8. Machine according to any of claims 1 to 7, characterised in that it includes a mechanism for supply of pieces (A) to be drilled and a mechanism for removal of the drilled pieces, both situated below the so-called "drilling" level at which is located the bit (5, 500) of the drilling assembly, means being provided for lifting the pieces (A) to be drilled to the drilling level and for lowering the drilled pieces from said level, and in that the mechanisms for supply and removal are combined into a single mechanism comprising, on the one hand, an endless conveyor (81, 82) whose direction of advance is perpendicular to the axis of the drill bit (5, 500) and on which the pieces (A) are to be located transversely, this conveyor extending from a loading station for the pieces (A) to be drilled to an unloading station for the drilled pieces and, on the other hand, a lifting and lowering member (85, 86, 87) having an active portion (93, 94, 95) for supporting a piece (A) before and after drilling thereof, said member being arranged in the vicinity of the conveyor and between the loading and unloading stations, and said active portion (93, 94, 95) being capable of occupying a bottom position in which it is situated below the level of the pieces (A) located on the conveyor (81, 82) and a top position in which it is substantially situated above the supporting means for the pieces (A) to be drilled.

9. Machine according to any of claims 1 to 8, characterised in that the drill bit (5, 500) comprises a hollow shank (200) and a drill head (210) including a hollow central piece (211), fixed to said shank (200) by its first end and bearing blades (212 to 215) in the vicinity of its second end, in that each blade comprises an outer portion (216) having in cross-section the shape of a convex back curved in an arc, and an inner portion (220) having in cross-section the shape of a concave heel curved in an arc, and in that for each blade the centre of curvature of the convex back and that of the concave heel coincide with each other and are located on the axis of rotation of the bit (5, 500).

10. Machine according to any of claims 1 to 9, characterised in that the debris removal system includes an air supply channel connected to the compressed air intake and formed between, on the one hand, the outer periphery of the drilling core, whose diameter is determined by the dimensions of the inner portions (220) of the blades (212 to 215) and, on the other hand, the inner peripheries of the hollow shank (200) and of the hollow central piece (211), having dimensions larger than those of said inner portions (220), and an air outlet channel formed between, on the one hand, the inner periphery of the drilling hole, whose diameter is determined by the dimensions of the outer portions (216) of the blades (212 to 215) and, on the other hand, the outer peripheries of the hollow shank (200) and of the hollow central piece (211), having dimensions smaller than those of said outer portions (216).

11. Machine according to either of claims 9 and 10, characterised in that the hollow central piece (211) has, in the vicinity of its first end, the form of a connecting sleeve provided with an external thread (230) situated between two centring rings (231, 232) one of which (231) is situated at the free end of the sleeve and has an outside diameter smaller than that of the turns of the external thread (230), while the other (232) has an outside diameter at least equal to that of said turns, and in that the free end of the hollow shank (200) is provided with an internal thread (202) capable of receiving said external thread (230) and situated between two annular seats (203, 204) with dimensions respectively adapted to receive said centring rings (231, 232).

12. Machine according to any of claims 9 to 11, characterised in that the hollow piece (211) has a polygonal section, the blades (212 to 215) each extending over a portion of the polygon, and in that the hollow shank (200) has a similar polygonal section whose apices are rounded and inscribed in a virtual circle having a diameter substantially equal to that of the circle which circumscribes the outer portions (216) of the blades (212 to 215).

## Patentansprüche

1. Bohrmaschine für lange Holzstücke mit zumindest einem, auf einem Traggestell (1) montierten Bohrsatz, welcher Bohrsatz
- einen Bohreinsatz (5, 500), der ein erstes mit Messern (212 bis 215) versehenes freies Ende zum Bohren aufweist,
- einen mit dem zweiten Ende des Bohreinsatzes verbundenen Drehantriebsmechanismus (3, 4) für den Bohreinsatz (5, 500),
- einen Antriebsmechanismus zum Längsverschieben des Bohreinsatzes, mit einem in der Nähe des zweiten Endes des Bohreinsatzes befindlichen Supportschlitten (6), Verschiebeeinrichtungen (9) für den Schlitten und eine Führung (7) für den Schlitten,
- ein festes Stützlager (11) für den Bohreinsatz (5, 500), das auf dem Traggestell (1) in der Nähe der vom ersten Ende des Bohreinsatzes vor dem Bohrvorgang eingenommenen Position angeordnet ist, und
- ein System zur Beseitigung des Holzabfalls mit einer Druckluftzirkulationseinrichtung (15, 16, 36) aufweist, wobei die Maschine darüber hinaus Haltemittel (20, 21, 22; 50, 51) für ein zu bohrendes Holzstück (A) aufweist,
dadurch gekennzeichnet, daß der Bohrsatz mindestens ein bewegliches Stützlager (10) für den Bohreinsatz (5, 500) aufweist, welches auf einer Fußplatte (14) in bezug auf das Traggestell (1) synchron mit dem Schlitten (6) derart gleitbar angeordnet ist, daß sich das bewegliche Lager (1) konstant in der Nähe einer einem konstanten Bruchteil der vom festen Lager (11) zum zweiten Ende des Bohreinsatzes (5, 500) reichenden Länge des Bohreinsatzes entprechenden Position befindet, daß die Führung (7) für den Schlitten (6) zugleich als Führung für die Fußplatte (14) des beweglichen Lagers (10) dient, und daß der Bohreinsatz äußere Rillen aufweist, deren radiale Abmessungen im wesentlichen gleich sind den radialen Außenabmessungen der Messer (212 bis 215), wobei das System zur Beseitigung des Holzabfalls einen Fühler (35) für Abfall aufweist, der am dem Bohreinsatz (5, 500) zugewandten Ende des Holzstücks (A) angeordnet und mit der Durckluftzirkulationseinrichtung verbunden ist.

2. Maschine nach Anspruch 1, dadurch gekennzeichnet, daß bei einstellbarem festen Lager (11) der Abfallfühler (35) mit diesem Lager fest verbunden ist.

3. Maschine nach Anspruch 1 oder 2, dadurch gekennzeichnet, daß mindestens eines der Lager (10, 11) einen Ring (12, 13) für ein Kugellager aufweist, das einen Mittelring hält, dessen Innenumfang an den Umfang des Bohreinsatzes (5, 500) angepaßt ist.

4. Maschine nach irgendeinem der Ansprüche 1 bis 3, dadurch gekennzeichnet, daß die Haltemittel (20, 21, 22; 50, 51) mindestens ein Paar von Backen (23, 24; 25, 26; 56, 57) zum Einspannen des zu bohrenden Holzstückes (A) aufweisen, wobei jeder Backen einen planen Teil aufweist und diese planen Teile zueinander senkrecht sind und so zwei Referenzebenen bilden, die die Positionierung eines gegebenen Punktes des durch die Backen eingespannten Abschnittes eines Holzstücks (A) relativ zum Bohreinsatz (5, 500) gestatten.

5. Maschine nach irgendeinem der Ansprüche 1 bis 4, dadurch gekennzeichnet, daß sie Mittel zum Ausrichten der beiden Enden des zu bohrendes Holzstücks (A) vor dem Bohreinsatz (5, 500) mindestens eines Bohrsatzes aufweist.

6. Maschine nach Anspruch 5, dadurch gekennzeichnet, daß sie mindestens eine um eine zur Achse des Bohreinsatzes (5) senkrechte Achse drehbar angeordnete Stütze (22) aufweist, mittels welcher das zu bohrende Holzstück (A) derart verschwenkbar ist, daß seine beiden Enden nacheinander dem Bohreinsatz (5) zuwendbar sind, und daß sie ferner mindestens eine drehfeste, mit dem Bohreinsatz (5) und der drehbaren Stütze (22) fluchtend angeordnete Stütze (21) aufweist, wobei die feste Stütze (21) Backen (23, 24) aufweist, die in eine Spannposition, in der sie das zu bohrende Holzstück (A) in Flucht mit dem Bohreinsatz (5) festhalten, und in eine beabstandete Position bringbar sind, um das Verschwenken des Holzstückes (A) zu ermöglichen.

7. Maschine nach irgendeinem der Ansprüche 1 bis 6, dadurch gekennzeichnet, daß die Haltemittel (50, 51) für das zu bohrende Holzstück (A) quer zur Achse des Bohreinsatzes (5, 500) derart bewegbar sind, daß mehrere verschiedene Punkte des Querschnitts des Holzstücks (A) zum Bohren von mindestens zwei parallelen Löchern dem Bohreinsatz zuwendbar sind.

8. Maschine nach irgendeinem der Ansprüche 1 bis 7, dadurch gekennzeichnet, daß sie einen Zuführungsmechanismus für zu bohrenden Holzstücke (A) und einen Abtransportmechanismus für gebohrte Holzstücke aufweist, die beide unterhalb des "Bohrniveau" genannten Niveaus, auf welchem sich der Bohreinsatz (5, 500) des Bohrsatzes befindet, angeordnet sind, wobei Mittel zum Heben der zu bohrenden Holzstücke (A) auf das Bohrniveau und zum Absenken der gebohrten Holzstücke von diesem Niveau vorgesehen sind, und daß die Zuführungs- und Abtransportmechanismen zu einem einzigen Mechanismus vereinigt sind, der einerseits einen Endlosförderer (81, 82), dessen Vorschubrichtung senkrecht zur Achse des Bohreinsatzes (5, 500) ist, und auf dem sich die Holzstücke (A) in Querposition befinden, wobei sich der Förderer von einer Aufnahmeposition der zu bohrenden Holzstücke (A) bis zu einer Entladeposition der gebohrten Stücke erstreckt, und andererseits ein Hebe- und Senkorgan (85, 86, 87) mit einem zum Halten eines Holsstückes (A) vor und nach dem Bohren bestimmten Aktivteil (93, 94, 95) aufweist, welches Organ in der Nähe des Förderers und zwischen der Aufnahmeposition und der Entladeposition angeordnet ist, wobei der Aktivteil (93, 94, 95) in eine niedrige Position, in der er sich unterhalb des Niveaus der auf dem Förderer (81, 82) befindlichen Holzstücke (A) befindet, und in eine hohe Position bringbar ist, in der er sich im wesentlichen auf dem Niveau der Haltemittel der zu bohrenden Holzstücke (A) befindet.

9. Maschine nach irgendeinem der Ansprüche 1 bis 8, dadurch gekennzeichnet, daß der Bohreinsatz (5, 500) einen hohlen Schaft (200) und einen ein hohles Mittelstück (211) aufweisenden Bohrkopf (210) umfaßt, welcher Bohrkopf mit seinem ersten Ende am Schaft (200) befestigt ist und in der Nähe seines zweiten Endes Messer (212 bis 215) trägt, daß jedes Messer einen im Querschnitt die Form eines konvexen Rückens mit Kreisbogenkrümmung aufweisenden Außenteil (216) und einen im Querschnitt die Form eines konkaven Absatzes mit Kreisbogenkrümmung aufweisenden Innenteil (220) umfaßt und daß der Krümmungsmittelpunkt des konvexen Rückens und jener des konkaven Absatzes eines jeden Messers zusammenfallen und sich auf der Drehachse des Bohreinsatzes (5, 500) befinden.

10. Maschine nach irgendeinem der Ansprüche 1 bis 9, dadurch gekennzeichnet, daß das Abfallbeseitigungssystem einen Luftzuführungskanal, der mit dem Drucklufteinlaß verbunden und zwischen einerseits dem Außenumfang des Bohrkerns, dessen Durchmesser durch die Abmessungen der Innenteile (220) der Messer (212 bis 215) bestimmt ist, und anderseits dem Innenumfang der Hohlwelle (200) und des hohlen Mittelstücks (211) größerer Abmessung als die Innenteile (220) angeordnet ist, und einen Luftableitkanal aufweist, der zwischen einerseits dem Innenumfang des Bohrloches, dessen Durchmesser von den Abmessungen der Außenteile (216) der Messer (212 bis 215) bestimmt ist, und andererseits dem Außenumfang der Hohlwelle (200) und des hohlen Mittelstücks (211) kleinerer Abmessung als die Außenteile (216) angeordnet ist.

11. Maschine nach irgendeinem der Ansprüche 9 und 10, dadurch gekennzeichnet, daß das hohle Mittelstück (211) in der Nähe seines ersten Endes die Form einer Verbindungsmanschette aufweist, die mit einem zwischen zwei Zentrierkronen (231, 232) befindlichen Außengewinde (230) versehen ist, wobei die eine Zentrierkrone (231) am freien Ende der Manschette angeordnet ist und einen Außendurchmesser aufweist, der geringer ist als jener der Gewindegänge des Außengewindes (230), während die andere Zentrierkrone (232) einen Außendurchmesser aufweist, der zumindest gleich ist jenem der Gewindegänge, und daß das freie Ende der Hohlwelle (200) mit einem Innengewinde (202) zur Aufnahme des Außengewindes (230) versehen ist, welches Innengewinde zwischen zwei ringförmigen Sitzen (203, 204) mit jeweils zur Aufnahme der Zentrierkronen (231, 232) geeigneten Abmessungen angeordnet ist.

12. Maschine nach irgendeinem der Ansprüche 9 bis 11, dadurch gekennzeichnet, daß das hohle Mittelstück (211) einen polygonalen Querschnitt hat, wobei sich die Messer (212 bis 215) jeweils auf einem Teil des Polygons erstrecken, und daß die Hohlwelle (200) einen ähnlichen polygonalen Querschnitt aufweist, dessen Eckpunkte abgerundet und in einen gedachten Kreis eingeschrieben sind, dessen Durchmesser im wesentlichen gleich ist jenem des Kreises, der die Außenteile (216) der Messer (212 bis 215) umschreibt.
